# FASCICULE DE BREVET EUROPEEN

(11) **EP 3 517 827 B1**
(45) Date de publication et mention de la délivrance du brevet: **09.09.2020**
(21) Numéro de dépôt: 19153618.4
(22) Date de dépôt: 24.01.2019
(51) Int. Cl.: F21S 41/143, F21S 41/24, F21S 41/27

(54) **MODULE LUMINEUX COMPORTANT UN ÉLÉMENT OPTIQUE PRIMAIRE ÉQUIPÉ DE DEUX NAPPES DE MISE EN FORME**
LEUCHTMODUL, DAS EIN PRIMÄRES OPTISCHES MODUL UMFASST, DAS MIT ZWEI FORMGEBUNGSMATTEN AUSGESTATTET IST
LIGHT MODULE COMPRISING A PRIMARY OPTICAL ELEMENT PROVIDED WITH TWO SHAPING LAYERS

(30) Priorité: 29.01.2018 FR 1850670
(43) Date de publication de la demande: 31.07.2019
(73) Titulaire: Valeo Vision, 93012 Bobigny Cedex (FR)
(72) Inventeur: COURCIER, Marine, 93012 BOBIGNY Cedex (FR)
(74) Mandataire: Valeo Vision

(56) Documents cités:
- EP-A1- 2 871 406
- EP-A1- 3 147 557
- EP-A2- 2 846 077
- US-A1- 2006 087 861

## Description

### DOMAINE TECHNIQUE DE L'INVENTION

L'invention concerne un module lumineux pour un véhicule automobile qui est apte à projeter un faisceau lumineux à segments jointifs.

### ARRIERE PLAN TECHNIQUE DE L'INVENTION

Un véhicule automobile est équipé de projecteurs destinés à produire un faisceau lumineux qui éclaire la route devant le véhicule, notamment la nuit ou en cas de luminosité réduite.

Ces projecteurs peuvent généralement être utilisés selon deux modes d'éclairage : un premier mode « feux de route » et un deuxième mode « feux de croisement ».

Le mode « feux de route » permet de produire un faisceau lumineux de grande portée qui éclaire fortement la route loin devant le véhicule.

Le mode « feux de croisement » procure un éclairage de portée plus limité de la route, mais offrant néanmoins une bonne visibilité. La portée plus limitée permet de ne pas éblouir les autres usagers de la route.

Ces deux modes d'éclairage sont complémentaires. Le conducteur du véhicule doit manuellement changer de mode en fonction des circonstances, au risque d'éblouir par inadvertance un autre usager de la route. En pratique, le fait de changer de mode d'éclairage de façon manuelle peut manquer de fiabilité et s'avérer parfois dangereux.

En outre, le mode feux de croisement procure une visibilité parfois insatisfaisante pour le conducteur du véhicule.

Pour améliorer la situation, des projecteurs dotés d'une fonction ADB (Adaptive Driving Beam) d'éclairage adaptatif ont été proposés. Une telle fonction ADB est destinée à détecter de façon automatique un usager de la route susceptible d'être ébloui par un faisceau d'éclairage émis en mode feux de route par un projecteur, et à modifier le contour de ce faisceau d'éclairage de manière à créer une zone d'ombre à l'endroit où se trouve l'usager détecté.

Les avantages de la fonction ADB sont multiples : confort d'utilisation, meilleure visibilité par rapport à un éclairage en mode feux de croisement, meilleure fiabilité pour le changement de mode, risque d'éblouissement fortement réduit, conduite plus sûre.

Un système d'éclairage connu pour projecteur de véhicule automobile, doté d'une fonction ADB comprend un module optique primaire. Le module optique primaire comporte une pluralité de sources de lumière, par exemple des diodes électroluminescentes, associées à trois guides de lumière respectifs. Un élément optique secondaire de projection, par exemple une lentille, est associée au module optique primaire.

La lumière émise par chaque diode électroluminescente pénètre dans le guide de lumière associé et est émise par une extrémité de sortie du guide, de forme rectangulaire. L'élément optique secondaire associé projette une image de la face de sortie de chaque guide de lumière pour former, à l'avant du véhicule, des segments lumineux verticaux. Les segments lumineux produits se superposent partiellement dans la direction transversale. Les diodes électroluminescentes peuvent être allumées indépendamment l'une de l'autre, de façon sélective, pour obtenir l'éclairage souhaité.

Un tel système d'éclairage présente néanmoins certains inconvénients.

Un tel module optique primaire, comportant une pluralité de guides de lumière indépendants chacun associés à une source lumineuse, est très complexe et onéreux à réaliser.

De plus, le choix de matériau pour réaliser les éléments optiques d'un tel système d'éclairage est particulièrement limité. Ainsi, il n'est pas possible d'utiliser du verre. Les éléments optiques peuvent être réalisés par moulage par injection de polycarbonate, mais les conditions d'injection doivent être respectées précisément, ce qui entraîne des difficultés de production.

En outre, le faisceau lumineux à segment comporte une unique rangée de segments qui s'étendent sur toute la hauteur du faisceau lumineux à segments. De ce fait, lorsqu'un segment est éteint, la route se retrouve dans le noir sur une zone plus étendue verticalement que nécessaire pour ne pas éblouir un usager de la route.

Par ailleurs, pour des raisons de confort visuel, aussi bien que pour des raisons réglementaires, il est préférable que deux segments adjacents soient jointifs pour que le faisceau lumineux global éclaire la route de manière homogène. Or, les solutions connues ne permettent pas d'obtenir simplement des segments lumineux jointifs, notamment lorsque les sources lumineuses sont trop espacées les unes des autres. Pour obtenir un éclairage homogène, il est par exemple nécessaire d'employer des optiques primaires complexes.

Un module lumineux de véhicule automobile qui comprend les caractéristiques du préambule de la revendication 1 est connu du document EP 2 871 406 A1.

### BREF RESUME DE L'INVENTION

L'invention propose un module lumineux de véhicule automobile comprenant :
- au moins une première rangée transversale de sources lumineuses ;
- au moins un premier élément optique primaire monobloc qui présente au moins une première nappe de mise en forme qui comporte une face arrière transversale d'entrée de la lumière commune à toutes les sources lumineuses de la première rangée, une face supérieure et une face inférieure de guidage de la lumière par réflexion interne totale vers une face avant transversale de sortie ;
- au moins un dispositif bifocal d'imagerie qui est conçu pour projeter une image de chaque source lumineuse, le dispositif d'imagerie présentant un premier plan de focalisation transversale qui est agencé sensiblement à proximité des sources lumineuses et un deuxième plan de focalisation verticale qui est agencé sensiblement en coïncidence avec la face de sortie de la première nappe de mise en forme ;
   remarquable en ce que le module lumineux comporte au moins une deuxième rangée transversale de sources lumineuses qui est décalée verticalement par rapport à la première rangée, le premier élément optique primaire comportant au moins une deuxième nappe de mise en forme monobloc qui est associée à ladite deuxième rangée et qui comporte une face arrière transversale d'entrée de la lumière, commune à toutes les sources lumineuses de la deuxième rangée, et agencée dans le premier plan de focalisation transversale, une face supérieure et une face inférieure de guidage de la lumière par réflexion interne totale vers une face avant transversale de sortie qui est agencée dans le deuxième plan de focalisation verticale.

Le module lumineux réalisé selon les enseignements de l'invention permet ainsi réaliser un faisceau lumineux présentant deux rangées indépendantes de segments lumineux. Un tel élément optique primaire est plus aisé et son moule d'injection est moins onéreux à fabriquer.

Selon une autre caractéristique de l'invention, la face de sortie de la première nappe de mise en forme et la face de sortie de la deuxième nappe de mise en forme sont contigües par l'un de leurs bords transversaux, à l'épaisseur près de la lame séparant les deux nappes de mise en forme dans le moule d'injection.

Ceci permet notamment d'obtenir deux rangées de segments lumineux qui sont jointifs verticalement, même lorsque les sources de lumière de deux rangées sont écartées verticalement d'une distance supérieure à 10% de la hauteur de la surface d'émission d'une des sources de lumière.

Le module lumineux selon l'invention peut comporter au moins trois rangées de sources lumineuses, l'élément optique primaire comportant au moins trois nappes de mise en forme transversales chacune associée avec une rangée de sources lumineuses.

Avantageusement, chaque rangée comporte au moins trois sources lumineuses.

Selon un premier mode de réalisation de l'invention, chaque rangée de sources lumineuses comporte au moins un groupe de sources lumineuses dans lequel deux sources lumineuses adjacentes sont écartées d'une distance déterminée, la distance déterminée étant inférieure à 10% de la largeur transversale de la surface d'émission lumineuse d'une des sources lumineuses. Dans ce cas, les segments lumineux produits seront naturellement jointifs transversalement sur une même rangée.

Selon un deuxième mode de réalisation de l'invention, chaque rangée de sources lumineuses comporte au moins un groupe de sources lumineuses dans lequel deux sources lumineuses adjacente sont écartées d'une distance déterminée, la distance déterminée étant supérieure à 10% de la largeur transversale de la surface d'émission lumineuse d'une des sources lumineuses, notamment supérieur à la largeur transversale de la surface d'émission d'une des sources lumineuses.

Le dispositif d'imagerie comporte alors des moyens pour élargir transversalement la taille de l'image de chaque source lumineuse de manière que les images de deux sources lumineuses adjacentes d'un même groupe d'une même rangée soient jointives.

Par exemple, le dispositif d'imagerie comporte un élément optique secondaire qui comporte une surface de passage de la lumière comportant des motifs déviant les rayons lumineux pour élargir transversalement la taille de l'image de chaque source lumineuse.

En variante, la face d'entrée de la nappe de mise en forme associée avec ladite rangée de sources lumineuses écartées comporte des motifs en relief pour élargir transversalement la taille de l'image de chaque source lumineuse de manière que les images de deux sources lumineuses adjacentes d'un même groupe d'une même rangée soient jointives.

Il peut être avantageux d'agencer une lentille convergente interposée entre chaque source lumineuse et la face d'entrée de la nappe de mise en forme associée. Ceci permet d'uniformiser l'éclairement dans le plan des motifs. Ainsi, l'éclairement procuré par le faisceau lumineux est aussi plus uniforme tout en conservant une bonne discrimination des segments lumineux. En effet, la lentille convergente permet d'éviter que des rayons lumineux provenant d'une source lumineuse adjacente ne viennent éclairer des motifs voisins qui ne sont pas associés à ladite source lumineuse adjacente.

Selon un troisième mode de réalisation de l'invention, chaque rangée de sources lumineuses associée au premier élément optique est scindée au moins en deux groupes de sources lumineuses, chaque groupe étant écarté transversalement d'un groupe adjacent d'une distance déterminée supérieure à la largeur transversale d'une surface d'émission d'une des sources lumineuses de manière que les groupes images de deux groupes adjacents de sources lumineuses par le premier dispositif d'imagerie soient espacés d'un intervalle sombre déterminé.

Le module lumineux comporte avantageusement un deuxième élément optique primaire présentant les mêmes caractéristiques que le premier module optique primaire, le deuxième élément optique primaire étant associé avec au moins deux rangées de sources lumineuses dans lesquelles les sources lumineuses sont alignées en au moins un groupe, un deuxième dispositif bifocal d'imagerie étant associé au deuxième élément optique primaire pour projeter un groupe d'image des sources lumineuses associées dans l'intervalle sombre réservé entre deux groupes d'images projetés par le premier dispositif d'imagerie. Ceci permet d'obtenir un faisceau lumineux à segments jointifs connexe par superposition des segments projetés par les deux dispositifs d'imagerie.

Avantageusement, le premier élément optique primaire et le second élément optique primaire sont réalisés en une seule pièce. Ceci permet de limiter le nombre de pièce à monter. Ceci permet en outre d'éviter d'avoir à régler le positionnement d'un élément optique primaire par rapport à l'autre.

Chaque dispositif d'imagerie comporte au moins un élément optique secondaire, les éléments optiques secondaires de chacun de dispositifs d'imagerie étant réalisés avantageusement en une seule pièce commune. Ceci permet de limiter le nombre de pièce à monter. Ceci permet en outre d'éviter d'avoir à régler le positionnement d'un élément optique secondaire par rapport à l'autre. De plus, ceci permet d'agencer toutes les sources lumineuses sur une carte à circuits imprimés commune.

De manière générale, chaque dispositif d'imagerie peut être formé par la combinaison de la forme d'une face de sortie de la lumière de l'élément optique primaire et par une lentille de projection associée.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un élément optique primaire et un élément optique secondaire d'un premier module lumineux réalisé selon un premier mode de réalisation de l'invention ;
- la figure 2 est une vue de dessus qui représente le module lumineux de la figure 1 ;
- la figure 3 est une vue de côté qui représente le module lumineux de la figure 1 ;
- la figure 4 est une vue de face qui représente les sources lumineuses associées au module lumineux de la figure 1 ;
- la figure 5 est une vue de face qui représente un écran éclairé par un faisceau lumineux à segments produit par le module lumineux de la figure 1 ;
- la figure 6 est une vue similaire à celle de la figure 4 qui représente des sources lumineuses associées à un module lumineux réalisé selon un deuxième mode de réalisation de l'invention ;
- la figure 7 est une vue similaire à celle de la figure 5 qui représente les segments lumineux qui éclairerait l'écran si les sources lumineuses de la figure 6 étaient utilisées avec le module lumineux réalisé selon le premier mode de réalisation de l'invention ;
- la figure 8 est une vue en perspective d'un élément optique primaire d'un module lumineux réalisé selon le deuxième mode de réalisation de l'invention ;
- la figure 9 est une vue de dessus qui représente une variante de réalisation du module lumineux réalisé selon le deuxième mode de réalisation de l'invention ;
- la figure 10 est une vue similaire à celle de la figure 5 qui représente l'écran éclairé par un faisceau lumineux à segments émis par un module lumineux réalisé selon le deuxième mode de réalisation de l'invention ;
- la figure 11 est une vue de dessus d'un module lumineux réalisé selon un troisième mode de réalisation de l'invention et comportant deux éléments optiques primaires ;
- la figure 12 est une vue de face qui représente les sources lumineuses associées au premier élément optique primaire du module lumineux de la figure 11 ;
- la figure 13 est une vue de face similaire à celle de la figure 5 qui représente l'écran éclairé uniquement par le premier élément optique primaire du module lumineux de la figure 11 ;
- la figure 14 est une vue de face qui représente les sources lumineuses associées au deuxième élément optique primaire du module lumineux de la figure 11 ;
- la figure 15 est une vue de face similaire à celle de la figure 5 qui représente l'écran éclairé uniquement par le deuxième élément optique primaire du module lumineux de la figure 11.

### DESCRIPTION DETAILLEE DES FIGURES

Dans la suite de la description, on adoptera à titre non limitatif des orientations longitudinale, dirigée d'arrière en avant, verticale, dirigée de bas en haut, et transversale, dirigée de gauche à droite, indiquées par le trièdre "L,V,T" des figures.

L'orientation verticale "V" est utilisée à titre de repère géométrique sans rapport avec la direction de la gravité.

Dans la suite de la description, des éléments présentant une structure identique ou des fonctions analogues seront désignés par une même référence.

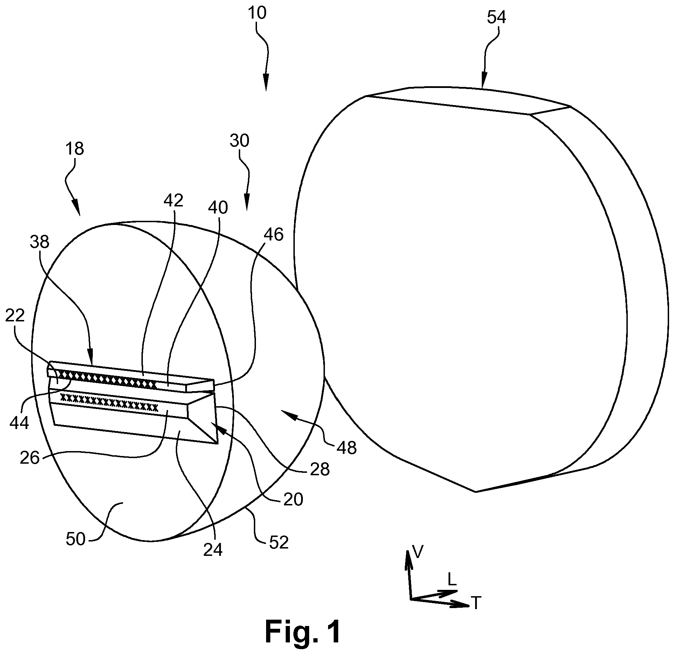

On a représenté à la figure 1 un module 10 lumineux qui est destiné à équiper un dispositif d'éclairage ou de signalisation pour véhicule automobile. Le module 10 lumineux est destiné à émettre un faisceau lumineux final longitudinalement vers l'avant du véhicule. Il s'agit ici d'un faisceau lumineux adaptatif qui est composé d'une pluralité de faisceaux élémentaires jointifs. Un tel module 10 lumineux est notamment apte à remplir une fonction de feu de route adaptatif, aussi connu sous l'appellation "ADB" pour "Adaptative Driving Beam", ou il est aussi apte à remplir une fonction de feu d'éclairage directionnel, aussi connu sous l'appellation "DBL" pour "Dynamic Bending Light". Chaque faisceau lumineux élémentaire éclaire une portion appelée par la suite "segment lumineux".

En variante non représentée de l'invention, le dispositif d'éclairage comprend en outre un deuxième module de feu de croisement qui est apte à émettre un unique faisceau de croisement à coupure.

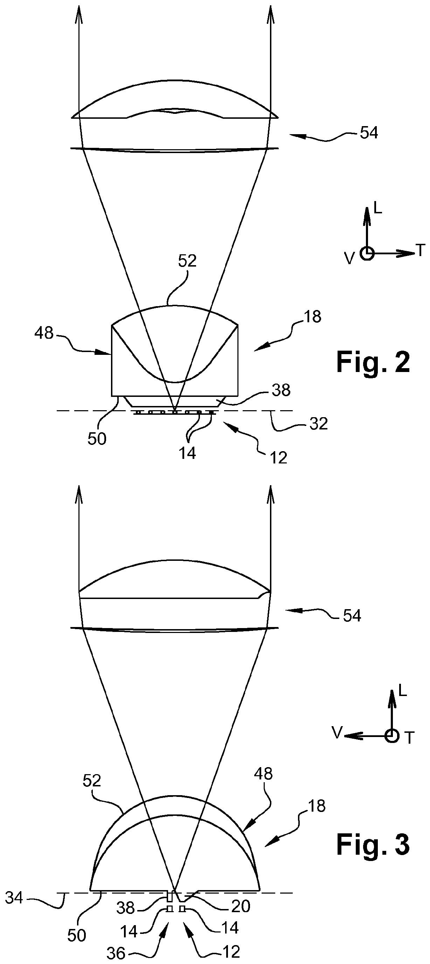

Le module lumineux 10 comporte au moins une première rangée 12 transversales de sources lumineuses 14 qui sont notamment visibles aux figures 2, 3 et 4.

Les sources lumineuses 14 peuvent être allumées indépendamment les unes des autres, de façon sélective, pour obtenir l'éclairage souhaité.

Chaque source lumineuse 14 est ici formée par une diode électroluminescente qui présente une surface d'émission lumineuse en forme de quadrilatère, ici de forme carrée. La surface d'émission s'étend dans un plan sensiblement vertical transversal. Chaque diode électroluminescente 14 émet des rayons lumineux dans un cône de lumière très ouverts. Chaque diode électroluminescente 14 émet ici la lumière selon un axe d'émission sensiblement longitudinal.

Chaque source lumineuse 14 est portée par une carte à circuit imprimé 16. Avantageusement, plusieurs sources lumineuses 14 adjacentes de la rangée 12 sont portées par une carte à circuit imprimé 16 commune pour former une barrette de sources lumineuses 14.

Le module lumineux 10 comporte aussi au moins un premier élément optique primaire 18 monobloc. Le terme "monobloc" signifie ici qu'aucune partie de l'élément optique primaire 18 ne peut être séparé du reste de l'élément optique primaire 18.

Ici, l'élément optique primaire 18 est réalisé venu de matière en un matériau transparent, par exemple en méthacrylate de polyméthyle.

Le premier élément optique primaire 18 comporte au moins une première nappe de mise en forme 20 de la lumière par l'intermédiaire de laquelle la lumière émise par les diodes électroluminescentes 14 de la première rangée 12 entre dans le premier élément optique primaire 18.

Une nappe de mise en forme 20 est définie comme une pièce optique apte à guider de la lumière par réflexion interne totale de cette lumière, par exemple d'une face d'entrée à une face de sortie. Une nappe de mise en forme 20 présente une épaisseur verticale faible au regard de sa largeur transversale.

Ainsi la nappe de mise en forme 20 présente une face supérieure 22 et une face inférieure 24 de guidage étendues séparée par un pourtour. Ce pourtour définit une épaisseur de la nappe de mise en forme 20, qui peut être variable, par exemple diminuant d'une extrémité à l'autre. Le pourtour comporte une face arrière 26 transversale verticale d'entrée de la lumière commune à toutes les sources lumineuses 14 de la première rangée 12. La face arrière 26 d'entrée est agencée à proximité des sources lumineuses 14 associées, par exemple à une distance comprise entre 0,1 et 1 millimètre.

La lumière émise par les sources lumineuses 14 qui entre par la face arrière 26 se propage à l'intérieur de la nappe de mise en forme 20 par réflexion interne totale contre les faces 22, 24 supérieure et/ou inférieure en direction d'une face 28 avant de sortie de la première nappe de mise en forme. La face avant 28 forme une portion du pourtour de la nappe de mise en forme 20.

La face 28 avant de sortie s'étend globalement dans un plan vertical transversal. Cette face 28 avant peut être plane ou elle peut être courbe.

Dans le mode de réalisation représenté aux figures, la face de sortie 28 de la première nappe de mise en forme 20 présente une hauteur supérieure à celle de sa face d'entrée 26. De ce fait, la première nappe de mise en forme 20 présente, en coupe longitudinale transversale, un profil divergent depuis sa face d'entrée 26 jusqu'à sa face de sortie 28.

La face d'entrée 26 présente une hauteur qui est égale ou légèrement supérieure à la hauteur de la surface d'émission des sources lumineuses 14 associées, par exemple entre une fois et trois fois la hauteur de la surface d'émission.

Le module lumineux 10 comporte au moins un dispositif bifocal d'imagerie 30 qui est conçu pour projeter une image de chaque source lumineuse 14. Le dispositif d'imagerie 30 présente un premier plan de focalisation transversale 32 qui est agencé sensiblement en coïncidence avec les sources lumineuses 14, à proximité de la face d'entrée 26 de la première nappe de mise en forme 20, et un deuxième plan de focalisation verticale 34 qui est agencé sensiblement en coïncidence avec la face de sortie de la première nappe de mise en forme 20.

Ainsi, pour chaque source lumineuse 14 agencée sensiblement à proximité du premier plan de focalisation transversale 32, les rayons lumineux émis par la surface d'émission de ladite source lumineuse 14 sont projetés sur la route de façon à former un segment lumineux délimité transversalement par des bords verticaux qui sont l'image nette des bords verticaux de la surface d'émission.

De même, chaque source lumineuse 14 crée sur la face de sortie 28 de la nappe de mise en forme 20 une source lumineuse secondaire. Chaque source lumineuse secondaire est ainsi délimitée verticalement par deux bords transversaux qui coïncident avec les arêtes formées par les faces supérieure et inférieure 22, 24 avec la face de sortie 28.

La face de sortie 28 étant agencée sensiblement dans le deuxième plan de focalisation verticale 34, les rayons lumineux émis par chaque source lumineuse secondaire sont projetés pour former un segment lumineux délimité verticalement par des bords verticaux qui sont l'image nette des bords transversaux de la source lumineuse secondaire.

Selon les enseignements de l'invention, le module lumineux 10 comporte au moins une deuxième rangée 36 transversale de sources lumineuses 14 qui est décalée verticalement par rapport à la première rangée 12. La deuxième rangée 36 est ici agencée au-dessus de la première rangée 12.

Les sources lumineuses 14 de la deuxième rangée 36 sont ici similaires à celles de la première rangée 36. Il s'agit ici de diodes électroluminescentes. Chaque source lumineuse 14 de la deuxième rangée 36 est ici plus particulièrement identique aux sources lumineuses 14 de la première rangée 12.

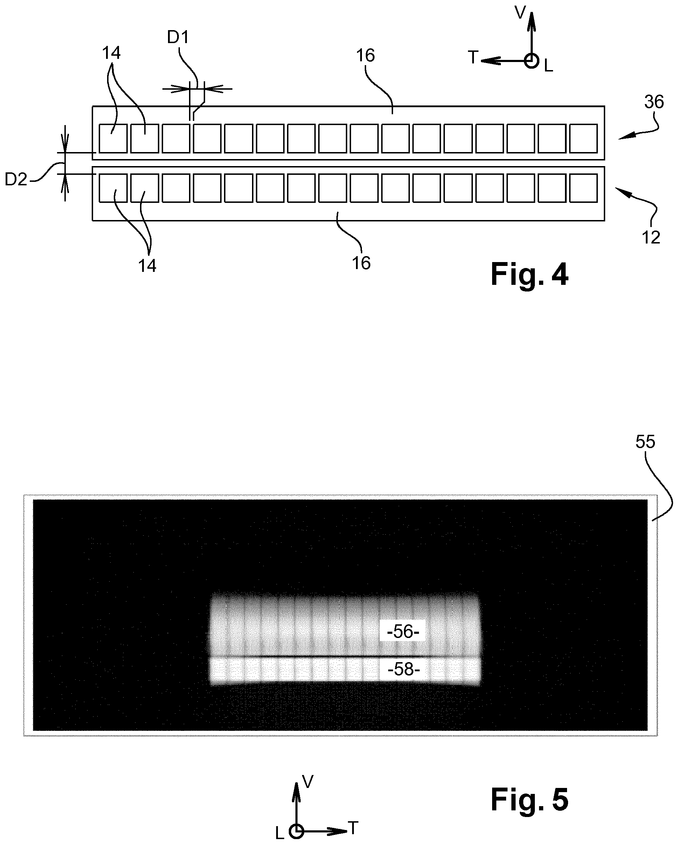

Comme cela est représenté à la figure 4, les sources lumineuses 14 de la deuxième rangée 36 sont en outre agencées les unes par rapport aux autres de manière identiques à celles de la première rangée 12. Chaque source lumineuse 14 de la deuxième rangée 36 est alignée verticalement avec une source lumineuse 14 correspondante de la première rangée 12.

Le premier élément optique primaire 18 comporte au moins une deuxième nappe de mise en forme 38 monobloc qui est associée à ladite deuxième rangée 36. A cet égard, la deuxième nappe de mise en forme 38 est ici agencée verticalement au-dessus de la première nappe de mise en forme 20.

La deuxième nappe de mise en forme 38 comporte aussi une face arrière 40 transversale verticale d'entrée de la lumière commune à toutes les sources lumineuses 14 de la deuxième rangée 36, une face supérieure 42 et une face inférieure 44 de guidage de la lumière par réflexion interne totale vers une face avant 46 transversale verticale de sortie de la première nappe de mise en forme.

La face de sortie 46 de la deuxième nappe de mise en forme 38 présente une hauteur légèrement supérieure à celle de sa face d'entrée 40. De ce fait, la deuxième nappe de mise en forme 38 présente, en coupe longitudinale transversale, un profil divergent depuis sa face d'entrée 40 jusqu'à sa face de sortie 48.

La face de sortie 46 de la deuxième nappe de mise en forme 38 présente ici une hauteur inférieure à celle de la première nappe de mise en forme 20.

La face d'entrée 40 présente une hauteur qui est sensiblement égale à la hauteur de la surface d'émission des sources lumineuses 14 associées.

La face d'entrée 40 de la deuxième nappe de mise en forme 38 est agencée dans le même plan vertical transversal que la face d'entrée 26 de la première nappe de mise en forme 20. De ce fait, la face d'entrée 40 de la deuxième nappe de mise en forme 38 est agencée sensiblement à proximité du premier plan de focalisation transversale 32 du dispositif d'imagerie 30.

De même, la face de sortie 46 de la deuxième nappe de mise en forme 38 est agencée dans le même plan que la face de sortie 28 de la première nappe de mise en forme 20. De ce fait, la face de sortie 46 de la deuxième nappe de mise en forme 38 est agencée sensiblement en coïncidence avec le deuxième plan de focalisation verticale 34 du dispositif d'imagerie 30.

La face de sortie 46 de la deuxième nappe de mise en forme 38 est sensiblement contigüe avec la face de sortie 28 de la première nappe de mise en forme 20, à l'épaisseur près de la lame qui permet de séparer chaque nappe de mise en forme 20, 38 dans le moule d'injection. Plus précisément, le bord transversal inférieur de la face de sortie 46 de la deuxième nappe de mise en forme 38 coïncide sensiblement avec le bord transversal supérieur de la face de sortie 28 de la première nappe de mise en forme 20. Ceci est permis par le profil divergent en coupe longitudinale verticale d'au moins l'une des nappes de mise en forme 20, 38. Ici, les deux nappes de mise en forme 20, 38 présentent un profil divergent.

Ainsi, les segments lumineux créés par les sources lumineuses 14 de la deuxième rangée 36 sont projetées par le dispositif d'imagerie 30 de la même manière que les segments lumineux créés par les sources lumineuses 14 de la première rangée 20.

En variante non représentée de l'invention, le module lumineux comporte au moins une troisième rangée transversale de sources lumineuses décalée verticalement par rapport aux autres rangées. L'élément optique primaire comporte alors au moins une troisième nappe de mise en forme transversale associée avec la troisième rangée de sources lumineuses. Les faces d'entrée de la troisième nappe de mise en forme sont respectivement dans le même plan vertical transversal que les faces d'entrée et de sortie de la première nappe de mise en forme. De ce fait, la face d'entrée de la troisième nappe de mise en forme est agencée sensiblement à proximité du premier plan de focalisation transversale 32 du dispositif d'imagerie, et la face de sortie de la troisième nappe de mise en forme est agencée sensiblement en coïncidence avec le deuxième plan de focalisation verticale 34 du dispositif d'imagerie.

Dans le mode de réalisation représenté aux figures, l'élément optique primaire 18 comporte une partie avant de correction 48 dans laquelle chaque nappe de mise en forme 20, 38 débouche directement par sa face de sortie 28, 46. La partie de correction 48 présente plus particulièrement une face arrière 50 par laquelle entrent les rayons lumineux sortant des nappes de mise en forme 20, 38. La face arrière 50 présente est ici plane verticale transversale.

La partie de correction 48 est réalisée en un matériau transparent présentant un même indice de réfraction que les nappes de mise en forme 20, 38. Plus particulièrement, la partie de correction 48 est ici réalisée dans le même matériau que les nappes de mise en forme 20, 38. La partie de correction 48 et les nappes de mise en forme 20, 38 sont ici réalisées venu de matière en une seule pièce. La face de sortie 28, 46 des nappes de mise en forme 20, 38 est confondue avec la face arrière 50 de la partie de correction 48.

La partie de correction 48 présente aussi une face avant de sortie 52 par laquelle les rayons lumineux émis par chaque source lumineuse 14 sortent de l'élément optique primaire 18.

Le dispositif d'imagerie 30 est ici formé par la combinaison de la forme de la face de sortie 52 de l'élément optique primaire 18 et par un élément optique secondaire 54 qui est agencé longitudinalement en avant et à distance de la face de sortie 52 de l'élément optique primaire 18. L'élément optique secondaire 54 est ici formé par une unique lentille de projection.

En variante non représentée de l'invention, l'élément optique secondaire est formé par un objectif présentant plusieurs lentilles.

Selon une autre variante non représentée de l'invention, l'élément optique secondaire est formée par un réflecteur.

Selon encore une autre variante non représentée de l'invention, la face de sortie de l'élément optique primaire présente une forme convergente (bi-sphérique ou quasi bi-sphérique) de sorte à corriger la courbure de champ du dispositif d'imagerie indépendamment dans la direction horizontale, d'une part, et dans la direction verticale, d'autre part.

Selon un premier mode de réalisation de l'invention qui est représenté aux figures 1 et 5, chaque rangée 12, 36 de sources lumineuses 14 comporte au moins un groupe de sources lumineuses dans lequel deux sources lumineuses 14 adjacentes sont écartées transversalement d'une première distance déterminée "D1", la première distance déterminée "D1" étant inférieure ou égale à 10% de la largeur transversale de la surface d'émission lumineuse de chacune des sources lumineuses 14, comme cela est représenté à la figure 4.

De manière non limitative, c'est notamment lorsque les diodes électroluminescentes 14 sont formées sur un même substrat. Ce type de montage est appelé "matrice de diodes électroluminescentes monolithique".

Dans ce mode de réalisation, le premier plan de focalisation transversale 32 du dispositif d'imagerie est agencé sensiblement sur le plan des faces d'émission des sources lumineuses 14 des deux rangées 20, 36.

On a représenté à la figure 5 un écran 55 agencé en avant à environ 25 m du véhicule équipé du module lumineux 10 éclairé par le faisceau lumineux à segments émis par le module lumineux 10 lorsque toutes les sources lumineuses 14 sont allumées simultanément. Une rangée supérieure de segments lumineux 56 est créée par projection de chaque source lumineuse 14 de la première rangée 12 et une rangée inférieure de segments lumineux 58 est créée par projection de chaque source lumineuse 14 de la deuxième rangée 36. On notera à ce propos que le dispositif d'imagerie 30 inverse verticalement l'image des première et deuxième rangées 12, 36. L'image des première et deuxième rangées 12, 36 est aussi inversée par rapport à un plan longitudinal vertical médian.

Lorsqu'une source lumineuse 14 de l'une ou l'autre des rangées 12, 36 est éteinte sélectivement, le segment lumineux correspondant laisse place à une zone sombre.

Dans ce mode de réalisation, chaque segment lumineux 56, 58 est délimité transversalement par deux bords verticaux nets qui sont directement les images des bords verticaux des surfaces d'émission de chaque surface d'émission. De même, chaque segment lumineux est délimité verticalement par deux bords transversaux qui sont les images des bords transversaux de la face de sortie 28, 46 de chaque nappe de mise en forme 20, 38. Ceci est dû à l'agencement particulier des deux plans de focalisation 32, 34 du dispositif d'imagerie 30.

Comme on peut le constater à la figure 5, étant donné que la distance déterminée "D1" entre deux sources lumineuses de chaque rangée 12, 6 est très faible, deux segments lumineux adjacents 56, 58 de chaque rangée sont sensiblement jointif, ou tout au moins séparés par un espace transversal suffisamment faible pour ne pas perturber le conducteur du véhicule.

Par ailleurs, en se reportant à la figure 4, on constate que les surfaces d'émission des sources lumineuses 14 de la première rangée 12 sont agencée à une distance verticale "D2" déterminée des surfaces d'émission des sources lumineuses 14 de la deuxième rangée 36. Cette distance verticale "D2" est très supérieure à la première distance "D1", par exemple supérieure à 50% de la hauteur d'une surface d'émission. Si les bords transversaux inférieur et supérieur de chaque surface d'émission étaient imagés directement par le dispositif d'imagerie 30, les segments lumineux 56 de la première rangée serait écartés verticalement des segments lumineux 58 de la deuxième rangée d'une distance trop grande pour permettre un éclairage confortable de la route.

Cependant, le deuxième plan de focalisation verticale 34 étant agencé en coïncidence avec les faces de sortie 28, 46 des deux nappes de mise en forme 20, 38, et lesdites faces de sortie 28, 46 étant sensiblement contigües, les segments lumineux 56 de la première rangée sont sensiblement jointifs avec les segments lumineux 58 de la deuxième rangée, ou tout au moins séparés par un espace vertical suffisamment faible pour ne pas perturber le conducteur du véhicule.

Par ailleurs, étant donné que les surfaces d'émission de chaque source lumineuse 14 présente une forme carrée, l'agencement selon l'invention procure naturellement aux segments lumineux une forme rectangulaire étirée verticalement.

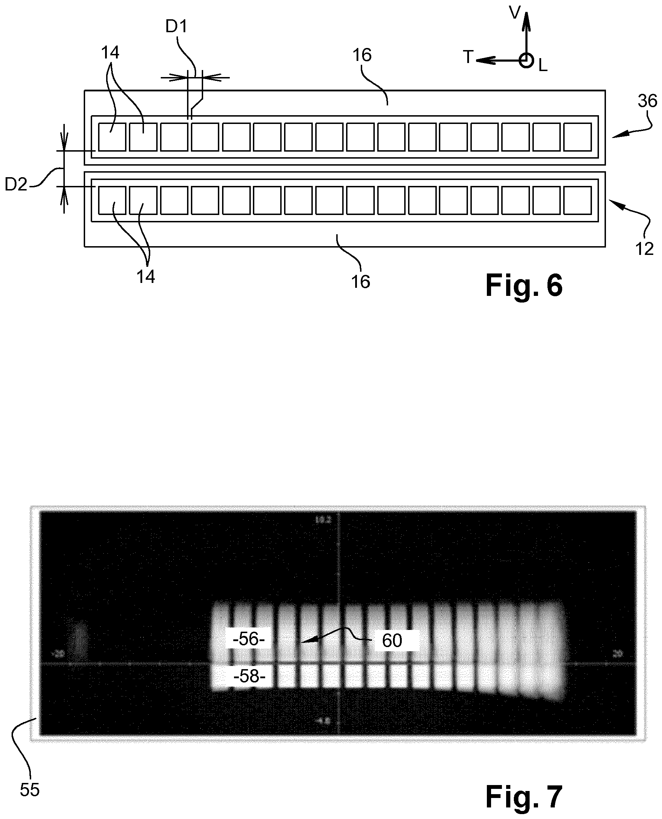

Selon un deuxième mode de réalisation de l'invention qui est représenté aux figures 6 à 10, chaque rangée 12, 36 de source lumineuse comporte au moins un groupe de sources lumineuses 14 dans lequel deux sources lumineuses 14 adjacente sont écartées d'une première distance transversale déterminée "D1", la distance déterminée "D1" étant supérieure à 10% de la largeur transversale de la surface d'émission lumineuse de chacune des sources lumineuses 14. La distance "D1" est par exemple supérieure à la largeur transversale de la surface d'émission de chacune des sources lumineuses 14.

Ceci est notamment le cas lorsque les sources lumineuses 14 sont des diodes électroluminescentes qui sont portés par des substrats individuels.

Si le dispositif d'imagerie imageait directement la surface d'émission des sources lumineuses 14, comme dans le premier mode de réalisation, on obtiendrait des segments lumineux 56, 58 écartés transversalement les uns des autres par des bandes 60 non éclairées trop larges pour procurer un éclairage confortable pour le conducteur, comme cela est par exemple illustré à la figure 7.

Pour pallier ce problème, le deuxième mode de réalisation de l'invention propose que le dispositif d'imagerie comporte des moyens pour élargir la taille de l'image de chaque source lumineuse 14 de manière que les segments lumineux 56, 58 formant images de deux sources lumineuses 14 adjacentes d'une même rangée 12, 36 soient jointives, voire se superposent de sorte à obtenir un éclairage encore plus homogène.

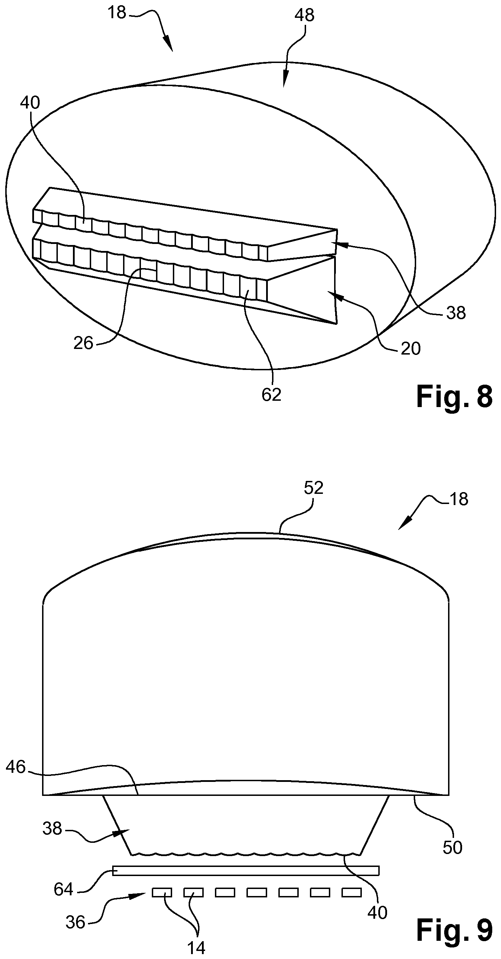

Comme cela est représenté à la figure 8, la face d'entrée 26, 40 de chaque nappe de mise en forme 20, 38 associée avec ladite rangée 12, 36 de sources lumineuses 14 écartées comporte des moyens pour élargir transversalement la taille de l'image de chaque source lumineuse 14 de manière que les images de deux sources lumineuses 14 adjacentes d'une même rangée 12, 36 soient jointives. Les faces d'entrée 26, 40 présentent ici des motifs 62 en relief, c'est-à-dire en saillie ou en creux, de forme cylindrique d'axe vertical formant des coussins. Chaque source lumineuse 14 est associée à un motif 62. Les motifs 62 sont ici conçus pour étaler les rayons lumineux transversalement, sans les dévier verticalement.

Le premier plan de focalisation transversale 32 est ici agencé en coïncidence avec les sources lumineuses 14.

En variante, le premier plan de focalisation transversale 32 est ici agencé en coïncidence avec les faces d'entrée 26, 40 des nappes de mise en forme 20, 38.

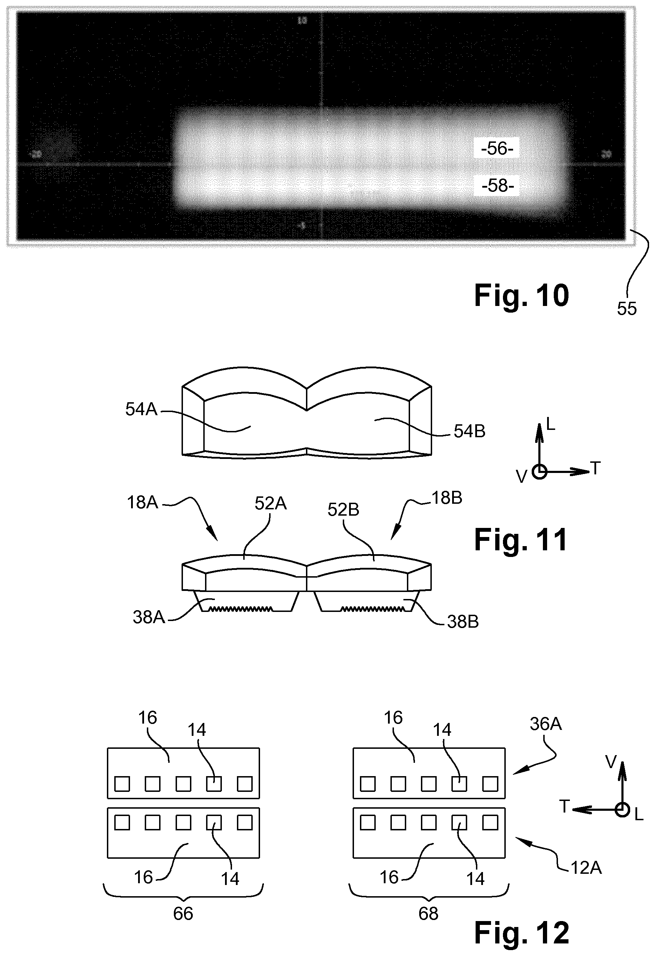

L'agencement de ces motifs 62 permet d'élargir transversalement les segments lumineux 56, 58 pour qu'ils soient jointifs, comme ceci est illustré à la figure 10.

Selon une variante de réalisation non représentée de ce deuxième mode de réalisation, les motifs 62 sont agencés sur une face de sortie de l'élément optique secondaire 54. L'effet obtenu est sensiblement le même que celui représenté à la figure 10.

Selon une autre variante de ce deuxième mode de réalisation qui est représentée à la figure 9, une lentille convergente est interposée entre chaque source lumineuse 14 et la face d'entrée 26, 40 de la nappe de mise en forme 20, 38 associée à ladite source lumineuse 14. Dans l'exemple représenté à la figure 9, toutes les lentilles convergentes sont réalisées en une unique matrice 64 de minilentilles. Cette matrice de minilentilles 64 s'étend dans un plan vertical transversal et elle permet d'orienter précisément les rayons lumineux émis par chaque source lumineuse 14 vers le motif 62 qui lui est associé sur la face d'entrée 26, 40 de la nappe de mise en forme 20, 38. Ceci permet d'uniformiser l'éclairage dans le plan des motifs, et donc de produire un faisceau qui procure un éclairage plus homogène tout en conservant une bonne discrimination des segments lumineux. En effet, les minilentilles permettent de garantir que les rayons lumineux émis par une source lumineuse déterminée viennent éclairer uniquement les motifs qui lui sont associés en évitant que ladite source lumineuse ne vienne éclairer des motifs voisins qui ne lui sont pas associés. Avantageusement, chaque minilentille présente des dimension correspondant à 1 à 5 fois les dimensions de la surface d'émission lumineuse de la source lumineuse 14. En particulier les dimensions de chaque minilentille peuvent être millimétriques.

Les deux premiers modes de réalisation permettent d'obtenir un faisceau lumineux dans lequel les segments lumineux sont jointifs. Cependant, on a constaté que les fournisseurs de sources lumineuses proposent souvent des composants sous forme de barrettes ne comportant qu'un nombre limité de sources lumineuses. Lorsqu'on souhaite réaliser une rangée présentant un plus grand nombre de sources lumineuses 14, il est nécessaire d'aligner plusieurs barrettes de sources lumineuses sur la même ligne. Cependant, les sources lumineuses à l'extrémité de deux barrettes adjacentes sont écartées d'une distance transversale supérieure à la distance transversale entre deux sources lumineuses de la même barrette. Il en résulte que les segments lumineux 56, 58 créés par deux barrettes différentes sont regroupés transversalement en deux groupes qui sont séparés par une bande sombre centrale. Cette bande sombre ne permet pas un éclairage confortable de la route.

L'invention propose de résoudre ce problème grâce à un troisième mode de réalisation représenté aux figures 11 à 15. Dans ce troisième mode de réalisation, le module lumineux 10 comporte deux éléments optiques primaires 18A, 18B qui sont chacun réalisés selon l'un quelconque des premier ou deuxième modes de réalisation.

Les deux éléments optiques primaires 18A, 18B sont ici agencés transversalement côte à côte. Ils sont ici réalisés venus de matière en une seule pièce commune.

Chaque élément optique primaire 18A, 18B comporte ainsi une première nappe de mise en forme 20A, 20B associée avec une première rangée 12A, 12B de sources lumineuses 14. De même chaque élément optique primaire 18A, 18B comporte une deuxième nappe de mise en forme 20A, 20B associée avec une deuxième rangée 36A, 36B de sources lumineuses 14. Le deuxième élément optique primaire 18B présente les mêmes caractéristiques que le premier module optique primaire 18A.

Chaque élément optique primaire 18A, 18B est associé avec un dispositif d'imagerie 30A, 30B qui est conforme au dispositif d'imagerie 30 décrit dans le premier et le deuxième mode de réalisation. Plus particulièrement, dans l'exemple représenté à la figure 11, chaque dispositif d'imagerie 30A, 30B est formé par la combinaison de la face de sortie 52A, 52B de l'élément optique primaire 18A, 18B associé et d'un élément optique secondaire 54A, 54B.

Les éléments optiques secondaires 54A, 54B sont ici formés par deux lentilles agencées transversalement côte à côte. Elles sont ici réalisées venues de matière en une seule pièce commune.

En se reportant à la figure 12, on a représenté la première rangée 12A et la deuxième rangée 36A de sources lumineuses 14 qui sont associées au premier élément optique primaire 18A. Chaque rangée 12A, 36A présente les mêmes caractéristiques que les rangées 12, 36 de sources lumineuses 14 des deux premiers modes de réalisation, à l'exception du fait que chaque rangée 12A, 36A est scindée au moins en deux groupes 66, 68 de sources lumineuses 14, chaque groupe 66 étant écarté transversalement d'un groupe adjacent 68 d'une distance déterminée "D3" transversale supérieure à la largeur transversale d'une surface d'émission d'une des sources lumineuses 14.

Les sources lumineuses 14 appartenant au même groupe 66, 68 d'une même rangée 12A, 36A sont ici portées par une même carte à circuit imprimé 16 pour former une barrette indépendante. Dans l'exemple représenté à la figure 12, le premier élément optique primaire 18A est ainsi associé à quatre barrettes réparties en deux rangées.

Ainsi, chaque groupe 66, 68 crée un groupe 70, 72 associé de segments lumineux. Les groupes de segments lumineux 70, 72 formant l'image de deux groupes 66, 68 adjacents de sources lumineuses 14 par le premier dispositif d'imagerie 30A sont ainsi espacés d'un intervalle 74 sombre de largeur transversale déterminé.

La largeur de l'intervalle 74 sombre est déterminée par l'écartement entre les deux groupes 66, 68 de sources lumineuses. Dans l'exemple représenté à la figure 12, deux barrettes 16 d'une même rangée sont écartées transversalement pour obtenir la largeur désirée.

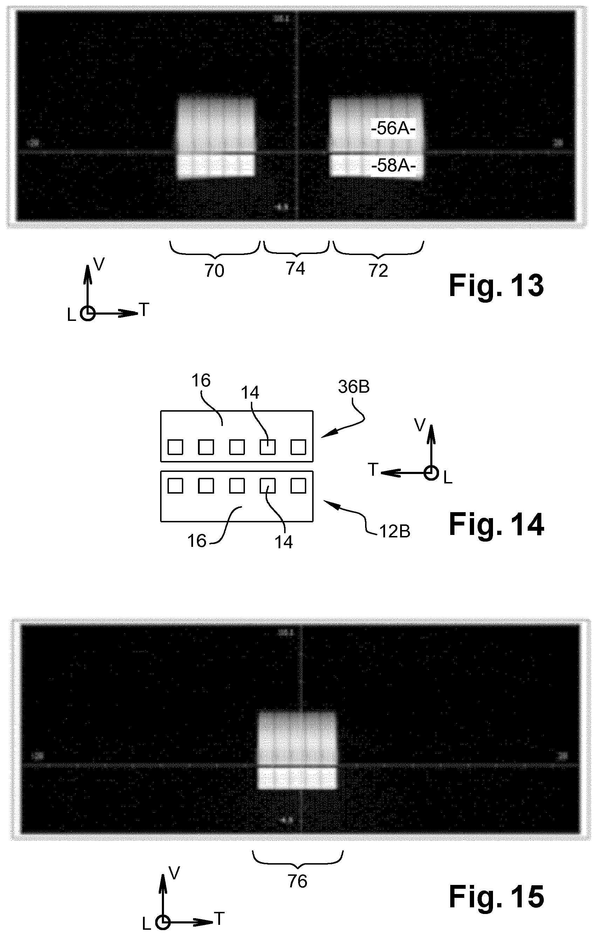

Le deuxième élément optique primaire 18B est associé avec au moins deux rangées 12B, 36B de sources lumineuses 14, Ici, le même nombre de rangées que le premier élément optique primaire 18A. Dans chacune desdites rangées 12B, 36B, les sources lumineuses sont ici alignées en un unique groupe. Le deuxième dispositif bifocal d'imagerie 30B associé au deuxième élément optique primaire 18B permet de projeter l'image des sources lumineuses 14 associées pour former un groupe 76 de segments lumineux 56B, 58B, comme cela est illustré à la figure 15.

Le groupe 76 de segments lumineux est projeté par le deuxième dispositif d'imagerie 30B dans l'intervalle 74 sombre réservé entre les deux groupes 70, 72 de segments lumineux 56A, 58A projetés par le premier dispositif d'imagerie 30A. Ainsi, le groupe 76 projeté par le deuxième dispositif d'imagerie 30B présente sensiblement la même largeur transversale que l'intervalle sombre 74. Lorsque toutes les sources lumineuses 14 des deux éléments optiques primaires 18A, 18B sont allumées simultanément, on obtient ainsi un éclairage similaire celui qui est représenté à la figure 5 dans lequel tous les segments lumineux 56A, 56B et 58A, 58B sont sensiblement jointifs.

Le module lumineux réalisé selon l'un quelconque des modes de réalisation de l'invention permet ainsi d'obtenir un faisceau lumineux à segments qui sont jointifs sans se chevaucher ou bien en se chevauchant partiellement pour obtenir un éclairage plus homogène. Ceci permet d'éteindre sélectivement chaque segment pour créer une zone d'ombre tout en éclairant confortablement la route.

## Revendications

1. Module lumineux (10) de véhicule automobile comprenant :
- au moins une première rangée (12, 12A, 12B) transversales de sources lumineuses (14) ;
- au moins un premier élément optique primaire (18 18A) monobloc qui présente au moins une première nappe de mise en forme (20, 20A, 20B) qui comporte une face arrière (26, 26A, 26B) transversale d'entrée de la lumière commune à toutes les sources lumineuses (14) de la première rangée (12, 12A, 12B), une face supérieure (22) et/ou une face inférieure (24) de guidage de la lumière par réflexion interne totale vers une face avant (28) transversale de sortie ;
- au moins un dispositif (30, 30A, 30B) bifocal d'imagerie qui est conçu pour projeter une image de chaque source lumineuse (14), le dispositif d'imagerie (30, 30A, 30B) présentant un premier plan de focalisation transversale (32) qui est agencé sensiblement en coïncidence avec les sources lumineuses (14) et un deuxième plan de focalisation verticale (34) qui est agencé sensiblement en coïncidence avec la face de sortie (28) de la première nappe de mise en forme (20, 20A, 20B) ;
**caractérisé en ce que** le module lumineux (10) comporte au moins une deuxième rangée (36, 36A, 36B) transversale de sources lumineuses (14) qui est décalée verticalement par rapport à la première rangée (12, 12A, 12B), le premier élément optique primaire (18, 18A, 18B) comportant au moins une deuxième nappe de mise en forme (38, 38A, 38B) monobloc qui est associée à ladite deuxième rangée (36, 36A, 36B) et qui comporte une face arrière (40) transversale d'entrée de la lumière, commune à toutes les sources lumineuses (14) de la deuxième rangée (36, 36A, 36B), et agencée dans le premier plan de focalisation transversale (32), une face supérieure (42) et/ou une face inférieure (44) de guidage de la lumière par réflexion interne totale vers une face avant (46) transversale de sortie qui est agencée dans le deuxième plan de focalisation verticale (34).

2. Module lumineux (10) selon la revendication précédente, **caractérisé en ce que** la face de sortie (28) de la première nappe de mise en forme (20, 20A, 20B) et la face de sortie (46) de la deuxième nappe de mise en forme (38) sont contigües par l'un de leurs bords transversaux.

3. Module lumineux (10) selon l'une quelconque des revendications précédentes, **caractérisé en ce qu'**il comporte au moins trois rangées de sources lumineuses (14), l'élément optique primaire (18) comportant au moins trois nappes de mise en forme transversales chacune associée avec une rangée de sources lumineuses.

4. Module lumineux (10) selon l'une quelconque des revendications précédentes, **caractérisé en ce que** chaque rangée (12, 12A, 12B, 36, 36A, 36B) de sources lumineuses (14) comporte au moins un groupe de sources lumineuses (14) dans lequel deux sources lumineuses (14) adjacentes sont écartées d'une distance (D1) déterminée, la distance déterminée (D1) étant inférieure à 10% de la largeur transversale de la surface d'émission lumineuse d'une des sources lumineuses (14).

5. Module lumineux (10) selon l'une quelconque des revendications 1 à 4, **caractérisé en ce que** chaque rangée (12, 12A, 12B, 36, 36A, 36B) de sources lumineuses (14) comporte au moins un groupe de sources lumineuses (14) dans lequel deux sources lumineuses (14) adjacente sont écartées d'une distance déterminée (D1), la distance déterminée (D1) étant supérieure à 10% de la largeur transversale de la surface d'émission lumineuse d'une des sources lumineuses (14), notamment supérieur à la largeur transversale de la surface d'émission d'une des sources lumineuses (14).

6. Module lumineux selon la revendication précédente, **caractérisé en ce que** le dispositif d'imagerie (30, 30A, 30B) comporte des moyens pour élargir transversalement la taille de l'image de chaque source lumineuse (14) de manière que les images de deux sources lumineuses (14) adjacentes d'un même groupe d'une même rangée soient jointives.

7. Module lumineux (10) selon l'une quelconque des revendications 5 ou 6, **caractérisé en ce que** le dispositif d'imagerie (30, 30A, 30B) comporte un élément optique secondaire (54, 54A, 54B) qui comporte une surface de passage de la lumière comportant des motifs déviant les rayons lumineux pour élargir transversalement et/ou verticalement la taille de l'image de chaque source lumineuse (14).

8. Module lumineux (10) selon la revendication 5, **caractérisé en ce que** la face d'entrée (26, 40) de la nappe de mise en forme (20, 20A, 20B, 38, 38A, 38B) associée avec ladite rangée (12, 12A, 12B, 36, 36A, 36B) de sources lumineuses (14) écartées comporte des motifs en relief pour élargir transversalement la taille de l'image de chaque source lumineuse (14) de manière que les images de deux sources lumineuses (14) adjacentes d'un même groupe d'une même rangée (12, 12A, 12B, 36, 36A, 36B) soient jointives.

9. Module lumineux (10) selon la revendication précédente, **caractérisé en ce qu'**une lentille convergente (64) est interposée entre chaque source lumineuse (14) et la face d'entrée (26, 40) de la nappe de mise en forme (20, 20A, 20B, 38, 38A, 38B) associée.

10. Module lumineux selon l'une quelconque des revendications précédentes, **caractérisé en ce que** chaque rangée (12A, 36A) de sources lumineuses (14) associée au premier élément optique (18A) est scindée au moins en deux groupes (66, 68) de sources lumineuses (14), chaque groupe (66, 68) étant écarté transversalement d'un groupe adjacent d'une distance déterminée (D3) supérieure à la largeur transversale d'une surface d'émission d'une des sources lumineuses (14) de manière que les groupes (70, 72) images de deux groupes (66, 68) adjacents de sources lumineuses (14) par le premier dispositif d'imagerie (30A) soient espacés d'un intervalle (74) sombre déterminé.

11. Module lumineux (10) selon la revendication précédente, **caractérisé en ce qu'**il comporte un deuxième élément optique primaire (18B) présentant les mêmes caractéristiques que le premier module optique primaire (18A), le deuxième élément optique primaire (18B) étant associé avec au moins deux rangées (12B, 36B) de sources lumineuses (14) dans lesquelles les sources lumineuses (14) sont alignées en au moins un groupe, un deuxième dispositif bifocal d'imagerie (30B) étant associé au deuxième élément optique primaire (18B) pour projeter un groupe (76) d'image des sources lumineuses (14) associées dans l'intervalle (74) sombre réservé entre deux groupes d'images (70, 72) projetés par le premier dispositif d'imagerie (30A).

12. Module lumineux (10) selon la revendication précédente, **caractérisé en ce que** le premier élément optique primaire (18A) et le second élément optique primaire (18B) sont réalisés en une seule pièce.

13. Module lumineux (10) selon l'une quelconque des revendications 10 à 12, **caractérisé en ce que** chaque dispositif d'imagerie (30A, 30B) comporte au moins un élément optique secondaire (54A, 54B), les éléments optiques secondaires (54A, 54B) de chacun de dispositifs d'imagerie (30A, 30B) étant réalisés en une seule pièce commune.

14. Module lumineux (10) selon l'une quelconque des revendications précédentes, **caractérisé en ce que** chaque dispositif d'imagerie (30, 30A 30B) est formé par la combinaison de la forme d'une face de sortie (52, 52A, 52B) de la lumière de l'élément optique primaire (18, 18A, 18B) et par une lentille de projection (54, 54A, 54B) associée.

## Patentansprüche

1. Leuchtmodul (10) eines Kraftfahrzeugs, welches umfasst:
- wenigstens eine erste Querreihe (12, 12A, 12B) von Lichtquellen (14);
- wenigstens ein einstückiges erstes primäres optisches Element (18, 18A), welches wenigstens eine erste Formgebungsschicht (20, 20A, 20B) aufweist, welche eine quer angeordnete hintere Eintrittsseite (26, 26A, 26B) des Lichtes, die allen Lichtquellen (14) der ersten Reihe (12, 12A, 12B) gemeinsam ist, eine Oberseite (22) und/oder eine Unterseite (24) zur Führung des Lichtes durch innere Totalreflexion hin zu einer quer angeordneten vorderen Austrittsseite (28) aufweist;
- wenigstens eine bifokale Bildgebungsvorrichtung (30, 30A, 30B), welche dafür ausgebildet ist, ein Bild jeder Lichtquelle (14) zu projizieren, wobei die Bildgebungsvorrichtung (30, 30A, 30B) eine erste, quer verlaufende Fokussierungsebene (32), welche im Wesentlichen in Übereinstimmung mit den Lichtquellen (14) angeordnet ist, und eine zweite, vertikale Fokussierungsebene (34), welche im Wesentlichen in Übereinstimmung mit der Austrittsseite (28) der ersten Formgebungsschicht (20, 20A, 20B) angeordnet ist, aufweist;
**dadurch gekennzeichnet, dass** das Leuchtmodul (10) wenigstens eine zweite Querreihe (36, 36A, 36B) von Lichtquellen (14) aufweist, welche in Bezug auf die erste Reihe (12, 12A, 12B) vertikal versetzt ist, wobei das erste primäre optische Element (18, 18A, 18B) wenigstens eine einstückige zweite Formgebungsschicht (38, 38A, 38B) aufweist, welche der zweiten Reihe (36, 36A, 36B) zugeordnet ist und welche eine quer angeordnete hintere Eintrittsseite (40) des Lichtes, die allen Lichtquellen (14) der zweiten Reihe (36, 36A, 36B) gemeinsam ist und in der ersten, quer verlaufenden Fokussierungsebene (32) angeordnet ist, eine Oberseite (42) und/oder eine Unterseite (44) zur Führung des Lichtes durch innere Totalreflexion hin zu einer quer angeordneten vorderen Austrittsseite (46), welche in der zweiten, vertikalen Fokussierungsebene (34) angeordnet ist, aufweist.

2. Leuchtmodul (10) nach dem vorhergehenden Anspruch, **dadurch gekennzeichnet, dass** die Austrittsseite (28) der ersten Formgebungsschicht (20, 20A, 20B) und die Austrittsseite (46) der zweiten Formgebungsschicht (38) über einen ihrer Querränder aneinander angrenzen.

3. Leuchtmodul (10) nach einem der vorhergehenden Ansprüche, **dadurch gekennzeichnet, dass** es wenigstens drei Reihen von Lichtquellen (14) aufweist, wobei das primäre optische Element (18) wenigstens drei quer angeordnete Formgebungsschichten aufweist, die jeweils einer Reihe von Lichtquellen zugeordnet sind.

4. Leuchtmodul (10) nach einem der vorhergehenden Ansprüche, **dadurch gekennzeichnet, dass** jede Reihe (12, 12A, 12B 36, 36A, 36B) von Lichtquellen (14) wenigstens eine Gruppe von Lichtquellen (14) aufweist, in welcher zwei benachbarte Lichtquellen (14) um einen bestimmten Abstand (D1) beabstandet sind, wobei der bestimmte Abstand (D1) kleiner als 10 % der Breite in Querrichtung der Lichtemissionsfläche einer der Lichtquellen (14) ist.

5. Leuchtmodul (10) nach einem der Ansprüche 1 bis 4, **dadurch gekennzeichnet, dass** jede Reihe (12, 12A, 12B, 36, 36A, 36B) von Lichtquellen (14) wenigstens eine Gruppe von Lichtquellen (14) aufweist, in welcher zwei benachbarte Lichtquellen (14) um einen bestimmten Abstand (D1) beabstandet sind, wobei der bestimmte Abstand (D1) größer als 10 % der Breite in Querrichtung der Lichtemissionsfläche einer der Lichtquellen (14) ist, insbesondere größer als die Breite in Querrichtung der Emissionsfläche einer der Lichtquellen (14).

6. Leuchtmodul nach dem vorhergehenden Anspruch, **dadurch gekennzeichnet, dass** die Bildgebungsvorrichtung (30, 30A, 30B) Mittel zum Vergrößern der Größe des Bildes jeder Lichtquelle (14) in Querrichtung aufweist, derart, dass die Bilder von zwei benachbarten Lichtquellen (14) derselben Gruppe derselben Reihe aneinanderstoßen.

7. Leuchtmodul (10) nach einem der Ansprüche 5 oder 6, **dadurch gekennzeichnet, dass** die Bildgebungsvorrichtung (30, 30A, 30B) ein sekundäres optisches Element (54, 54A, 54B) aufweist, welches eine Durchgangsfläche des Lichtes aufweist, die Muster aufweist, welche die Lichtstrahlen ablenken, um die Größe des Bildes jeder Lichtquelle (14) in Querrichtung und/oder vertikal zu vergrößern.

8. Leuchtmodul (10) nach Anspruch 5, **dadurch gekennzeichnet, dass** die Eintrittsseite (26, 40) der Formgebungsschicht (20, 20A, 20B, 38, 38A, 38B), die der Reihe (12, 12A, 12B, 36, 36A, 36B) von beabstandeten Lichtquellen (14) zugeordnet ist, erhabene Muster aufweist, um die Größe des Bildes jeder Lichtquelle (14) in Querrichtung so zu vergrößern, dass die Bilder von zwei benachbarten Lichtquellen (14) derselben Gruppe derselben Reihe (12, 12A, 12B, 36, 36A, 36B) aneinanderstoßen.

9. Leuchtmodul (10) nach dem vorhergehenden Anspruch, **dadurch gekennzeichnet, dass** eine Sammellinse (64) zwischen jeder Lichtquelle (14) und der Eintrittsseite (26, 40) der zugeordneten Formgebungsschicht (20, 20A, 20B, 38, 38A, 38B) angeordnet ist.

10. Leuchtmodul nach einem der vorhergehenden Ansprüche, **dadurch gekennzeichnet, dass** jede Reihe (12A, 36A) von Lichtquellen (14), die dem ersten optischen Element (18A) zugeordnet ist, in wenigstens zwei Gruppen (66, 68) von Lichtquellen (14) aufgeteilt ist, wobei jede Gruppe (66, 68) in Querrichtung von einer benachbarten Gruppe um einen bestimmten Abstand (D3) beabstandet ist, die größer als die Breite in Querrichtung einer Emissionsfläche einer der Lichtquellen (14) ist, derart, dass die Gruppen (70, 72) von durch die erste Bildgebungsvorrichtung (30A) erzeugten Bildern von zwei benachbarten Gruppen (66, 68) von Lichtquellen (14) um einen bestimmten dunklen Zwischenraum (74) beabstandet sind.

11. Leuchtmodul (10) nach dem vorhergehenden Anspruch, **dadurch gekennzeichnet, dass** es ein zweites primäres optisches Element (18B) umfasst, das dieselben Merkmale wie das erste primäre optische Modul (18A) aufweist, wobei das zweite primäre optische Element (18B) wenigstens zwei Reihen (12B, 36B) von Lichtquellen (14) zugeordnet ist, in welchen die Lichtquellen (14) in wenigstens einer Gruppe aufgereiht sind, wobei eine zweite bifokale Bildgebungsvorrichtung (30B) dem zweiten primären optischen Element (18B) zugeordnet ist, um eine Gruppe (76) von Bildern der zugeordneten Lichtquellen (14) in den dunklen Zwischenraum (74) zu projizieren, der zwischen zwei Gruppen von Bildern (70, 72), die von der ersten Bildgebungsvorrichtung (30A) projiziert werden, ausgespart ist.

12. Leuchtmodul (10) nach dem vorhergehenden Anspruch, **dadurch gekennzeichnet, dass** das erste primäre optische Element (18A) und das zweite primäre optische Element (18B) aus einem Stück hergestellt sind.

13. Leuchtmodul (10) nach einem der Ansprüche 10 bis 12, **dadurch gekennzeichnet, dass** jede Bildgebungsvorrichtung (30A, 30B) wenigstens ein sekundäres optisches Element (54A, 54B) aufweist, wobei die sekundären optischen Elemente (54A, 54B) jeder Bildgebungsvorrichtung (30A, 30B) zusammen aus einem Stück hergestellt sind.

14. Leuchtmodul (10) nach einem der vorhergehenden Ansprüche, **dadurch gekennzeichnet, dass** jede Bildgebungsvorrichtung (30, 30A, 30B) durch die Kombination der Form einer Austrittsseite (52, 52A, 52B) des Lichtes des primären optischen Elements (18, 18A, 18B) und durch eine zugeordnete Projektionslinse (54, 54A, 54B) gebildet wird.

## Claims

1. Light module (10) of a motor vehicle comprising:
- at least one first transverse row (12, 12A, 12B) of light sources (14);
- at least one first one-piece primary optical element (18, 18A) which has at least one first forming layer (20, 20A, 20B) which comprises a transverse rear light input face (26, 26A, 26B) for the light that is common to all the light sources (14) of the first row (12, 12A, 12B), an upper face (22) and/or a lower face (24) for guiding the light by total internal reflection towards a transverse front output face (28);
- at least one bifocal imaging device (30, 30A, 30B) which is designed to project an image of each light source (14), the imaging device (30, 30A, 30B) having a first, transverse focusing plane (32) which is arranged substantially coinciding with the light sources (14) and a second, vertical focusing plane (34) which is arranged substantially coinciding with the output face (28) of the first forming layer (20, 20A, 20B);
**characterized in that** the light module (10) comprises at least one second transverse row (36, 36A, 36B) of light sources (14) which is offset vertically relative to the first row (12, 12A, 12B), the first primary optical element (18, 18A, 18B) comprising at least one second one-piece forming layer (38, 38A, 38B) which is associated with said second row (36, 36A, 36B) and which comprises a transverse rear input face (40) for the light, common to all the light sources (14) of the second row (36, 36A, 36B), and arranged in the first, transverse focusing plane (32), an upper face (42) and/or a lower face (44) for guiding the light by total internal reflection towards a transverse front output face (46) which is arranged in the second, vertical focusing plane (34).

2. Light module (10) according to the preceding claim, **characterized in that** the output face (28) of the first forming layer (20, 20A, 20B) and the output face (46) of the second forming layer (38) are contiguous by one of their transverse edges.

3. Light module (10) according to either one of the preceding claims, **characterized in that** it comprises at least three rows of light sources (14), the primary optical element (18) comprising at least three transverse forming layers each associated with a row of light sources.

4. Light module (10) according to any one of the preceding claims, **characterized in that** each row (12, 12A, 12B, 36, 36A, 36B) of light sources (14) comprises at least one group of light sources (14) in which two adjacent light sources (14) are separated by a determined distance (D1), the determined distance (D1) being less than 10% of the transverse width of the light emission surface of one of the light sources (14).

5. Light module (10) according to any one of Claims 1 to 4, **characterized in that** each row (12, 12A, 12B, 36, 36A, 36B) of light sources (14) comprises at least one group of light sources (14) in which two adjacent light sources (14) are separated by a determined distance (D1), the determined distance (D1) being greater than 10% of the transverse width of the light emission surface of one of the light sources (14), notably greater than the transverse width of the emission surface of one of the light sources (14).

6. Light module according to the preceding claim, **characterized in that** the imaging device (30, 30A, 30B) comprises means for transversely widening the size of each light source (14) so that the images of two adjacent light sources (14) of one and the same group of one and the same row are contiguous.

7. Light module (10) according to either one of Claims 5 and 6, **characterized in that** the imaging device (30, 30A, 30B) comprises a secondary optical element (54, 54A, 54B) which comprises a light passage surface comprising patterns deflecting the light rays to transversely and/or vertically widen the size of the image of each light source (14).

8. Light module (10) according to Claim 5, **characterized in that** the input face (26, 40) of the forming layer (20, 20A, 20B, 38, 38A, 38B) associated with said row (12, 12A, 12B, 36, 36A, 36B) of separated light sources (14) comprises relief patterns for transversely widening the size of the image of each light source (14) so that the images of two adjacent light sources (14) of one and the same group of one and the same row (12, 12A, 12B, 36, 36A, 36B) are contiguous.

9. Light module (10) according to the preceding claim, **characterized in that** a convergent lens (64) is interposed between each light source (14) and the input face (26, 40) of the associated forming layer (20, 20A, 20B, 38, 38A, 38B).

10. Light module according to any one of the preceding claims, characterized that in each row (12A, 36A) of light sources (14) associated with the first optical element (18A) is split at least into two groups (66, 68) of light sources (14), each group (66, 68) being transversely separated from an adjacent group by a determined distance (D3) greater than the transverse width of an emission surface of one of the light sources (14) so that the groups of images (70, 72) of two adjacent groups (66, 68) of light sources (14) produced by the first imaging device (30A) are spaced apart by a determined dark interval (74).

11. Light module (10) according to the preceding claim, **characterized in that** it comprises a second primary optical element (18B) having the same characteristics as the first primary optical module (18A), the second primary optical element (18B) being associated with at least two rows (12B, 36B) of light sources (14) in which the light sources (14) are aligned in at least one group, a second bifocal imaging device (30B) being associated with the second primary optical element (18B) to project a group (76) of images of the associated light sources (14) in the dark interval (74) reserved between two groups of images (70, 72) projected by the first imaging device (30A).

12. Light module (10) according to the preceding claim, **characterized in that** the first primary optical element (18A) and the second primary optical element (18B) are produced in a single piece.

13. Light module (10) according to any one of Claims 10 to 12, **characterized in that** each imaging device (30A, 30B) comprises at least one secondary optical element (54A, 54B), the secondary optical elements (54A, 54B) of each of the imaging devices (30A, 30B) being produced in a single common piece.

14. Light module (10) according to any one of the preceding claims, **characterized in that** in each imaging device (30, 30A 30B) is formed by the combination of the form of a light output face (52, 52A, 52B) of the primary optical element (18, 18A, 18B) and by an associated projection lens (54, 54A, 54B).
